# EUROPÄISCHE PATENTSCHRIFT

(11) **EP 1 556 624 B1**
(45) Veröffentlichungstag und Bekanntmachung des Hinweises auf die Patenterteilung: **17.12.2008**
(21) Anmeldenummer: 03809262.3
(22) Anmeldetag: 05.09.2003
(51) Int. Cl.: F16C 17/24, F16C 19/52

(54) **VORRICHTUNG ZUM ZUMINDEST DURCHLEITEN UND/ODER ÜBERTRAGEN VON DREHMOMENT**
DEVICE FOR AT LEAST TRANSDUCING AND/OR TRANSMITTING TORQUE
DISPOSITIF SERVANT AU MOINS A TRANSFERER ET/OU TRANSMETTRE UN COUPLE

(30) Priorität: 24.10.2002 DE 10249770
(43) Veröffentlichungstag der Anmeldung: 27.07.2005
(73) Patentinhaber: SEW-Eurodrive GmbH & Co, 76646 Bruchsal (DE)
(72) Erfinder: ZIMMERMANN, Heinrich, 76646 Bruchsal (DE)
(86) Internationale Anmeldenummer: PCT/EP2003/009843
(87) Internationale Veröffentlichungsnummer: WO 2004/038241

(56) Entgegenhaltungen:
- EP-A- 0 892 471
- US-A- 4 530 609
- US-A- 5 812 908
- US-A- 6 142 673
- PATENT ABSTRACTS OF JAPAN Bd. 0090, Nr. 25 (M-355), 2. Februar 1985 (1985-02-02) & JP 59 170523 A (HITACHI SEISAKUSHO KK), 26. September 1984 (1984-09-26)

## Beschreibung

Die Erfindung betrifft eine Vorrichtung zum zumindest Durchleiten und/oder Übertragen von Drehmoment.

Getriebe weisen eine abtriebsseitige Welle auf, die als Vollwelle oder Hohlwelle ausführbar ist und über mindestens ein Lager im Gehäuse des Getriebes gelagert ist

Der Wirkungsgrad und die Lebensdauer des Getriebes ist wesentlich mitbestimmt durch den Schmierstoff zur Schmierung der Verzahnungsteile, dessen Alterung durch physikalische und/oder chemische Prozesse beeinflussbar ist.

Aus der US 5,812,908 ist ein elektrischer Kontakt für ein rotierendes Element benannt.

Aus der EP 0 892 471 B1 ist ein Wälzlager mit Dichtung und elektrostatischer Entladungsschutzvorrichtung bekannt.

Aus der US 6,142,673 ist ein Lager mit elektrischer Brücke bekannt.

Aus der JP 59 170523 A ist eine Lagerschmiervorrichtung bekannt, bei der das Lager geschützt wird vor elektrolytischer Korrosion.

Aus der US 4,530,609 ist ein Kugellager für ein conveyor (Fließband-Förderer) bekannt..

Der Erfindung liegt daher die Aufgabe zugrunde, ein Getriebe zu schaffen, das kostengünstig herstellbar ist und eine hohe Lebensdauer bei möglichst vielen Anwendungen aufweist

Erfindungsgemäß wird die Aufgabe bei dem Getriebe oder entsprechend artverwandten Vorrichtungen nach den in Anspruch 1 angegebenen Merkmalen gelöst.

Wichtige Merkmale bei der Ersten Vorrichtung zum zumindest Durchleiten und/oder Übertragen von Drehmoment sind, dass sie eine Welle umfasst, die über zumindest ein Lager in einem Gehäuse der ersten Vorrichtung gelagert ist,
wobei eine zweite Vorrichtung mit der Welle lösbar verbindbar ist,
wobei das Gehäuse und die Welle über eine Komponente in elektrisch leitfähiger Verbindung stehen,
wobei mindestens einer der Kontaktbereiche zur Komponente ein ringlinienhafter Schleifkontakt ist,
wobei die Komponente aus nicht-isolierendem, also elektrisch leitfähigem Material ist,
wobei die Komponente als mit der Welle mitdrehender Ableitring ausgebildet ist, der Im Bereich seines größten Durchmessers einen ringlinienhaften Schleifkontakt zum Gehäuse aufweist
oder
die Komponente einen mit der Welle nicht-mitdrehenden Ableitring umfasst, der im Bereich seines kleinsten Durchmessers einen ringlinienhaften Schleifkontakt zur Welle aufweist,
wobei der Ableitring zumindest teilweise von einer Schutzkappe zum Schutz gegen mechanische Zerstörungen umgeben ist,
wobei die zweite Vorrichtung nach dem lösbaren Verbinden mit der Welle in axialer Richtung auf die Schutzkappe drückt,
wobei der Ableitring und die Schutzkappe derart fest verbunden sind, dass der Ableitring von der zweiten Vorrichtung mittels der Schutzkappe auf das Gehäuse in axialer Richtung gedrückt wird.

Vorteilig ist dabei, dass abtriebsseitig auftretende Spannungen abgebaut werden, indem die elektrischen Ladungen an das Gehäuse abgeleitet werden, das wiederum mit Masse verbindbar ist, also mit elektrischer Erde verbindbar ist. Die Masseverbindung ist dabei vorteiligerweise dadurch ausführbar, dass der verbundene Motor selbst mit elektrischer Erde verbunden ist. Da das Gehäuse der Vorrichtung und das Motorgehäuse aus Metall gefertigt sind, ist kein zusätzliches Teil zur Erdung des Gehäuses der Vorrichtung notwendig Wesentlich ist dabei aber, dass die Ströme nicht über das Innere des Getriebes, also über Verzahnungsteile, Lager und Schmierfilm, oder über das Innere der entsprechenden Vorrichtungen fließen, Somit sind diese Komponenten im Inneren der Vorrichtung geschützt.

Der verwendete Schleifkontakt ist dabei sehr kostengünstig herstellbar.. Die so geschaffene elektrische Verbindung weist einen viel geringeren Widerstand von der Welle zum Gehäuse auf als der Widerstand über das Lager, über einen Wellendichtring samt Schmierfilm oder über die im Inneren sich befindenden Teile. Der letztgenannte Widerstand hängt ab von verschiedenen Betriebsfaktoren, wie Betriebstemperatur, insbesondere im Bereich des Schmierspaltes, Schmierölsorte, Lagersorte und dergleichen Er kann dabei im Widerstandswertebereich von Isolatoren liegen

Bei einer bevorzugten Ausführung ist das Gehäuse mit elektrischer Masse verbunden, also elektrisch geerdet. Vorteilig ist dabei, dass sich keine Spannungen am Gehäuse aufbauen können und diese somit auch keine Gefährdung auslösen können.

Erfindungsgemäß ist die Komponente aus nicht-isolierendem, also elektrisch leitfähigem Material. Vorteilig ist dabei, dass Material mit einer hohen elektrischen Leitfähigkeit wie Metall, aber auch Material mit einer nicht ganz so hohen Leitfähigkeit, wie beispielsweise mit Graphit dotierte Kunststoffe, verwendbar sind. Die Leitfähigkeit muss aber derart sein, dass die Ströme derart gut abgeleitet werden, dass sich keine wesentlichen Spannungswerte aufbauen, insbesondere also die Spannung kleiner als 1 Volt ist.

Bei einer bevorzugten Ausführung weist die elektrische Verbindung von der Welle über die Komponente zum Gehäuse einen um mindestens eine Größenordnung niedrigeren Widerstand auf als der Widerstand, der der sonstigen Gesamtheit aller elektrischen Verbindungen zuordenbar ist, insbesondere nach Entfernen der Komponente. Vorteilig ist dabei, dass die im Inneren sich befindenden Komponenten geschützt sind, da nur ein äußerst geringer Anteil an Strom dort fließt. Insbesondere ist der Schmierstoff geschützt vor durch ihn hindurchfließenden elektrischen Strömen.

Nach der Erfindung umfasst die Komponente einen mit der Welle mitdrehenden Ableitring, der im Bereich seines größten Durchmessers einen Schleifkontakt zum Gehäuse aufweist. Vorteilig ist dabei, dass ein Wellendichtring auf einem kleineren Durchmesser anbringbar ist und die Ströme trotzdem über den Schleifkontakt ableitbar sind an das Gehäuse - auch wenn hohe Relativgeschwindigkeiten auftreten.

Die Komponente kann auch einen mit der Welle nichtmitdrehenden Ableitring umfassen, der im Bereich seines kleinsten Durchmessers einen Schleifkontakt zur Welle aufweist. Vorteilig ist dabei, dass die Relativgeschwindigkeiten gering sind und somit der Verschleiß gering ist.

Erfindungsgemäß der Ableitring dabei mit der Schutzkappe fest verbunden. Vorteilig ist dabei, dass die zweite Vorrichtung nicht direkt auf den empfindlichen Ableitring drückt und dieser somit vor Zerstörung geschützt ist..

Bei einer bevorzugten Ausführung berührt die zweite Vorrichtung die Schutzkappe und/oder den Ableitring und übt auf diese eine Kraft derart aus, dass eine Federspannung aufgebaut wird und der Ableitring mit dem Gehäuse in Kontakt gebracht wird. Vorteilig ist dabei, dass auch bei Verschleiß und dadurch bewirkten Verbrauch von Material des Ableitrings stets Material sozusagen nachgeführt wird und der Schleifkontakt somit funktionsfähig bleibt.

Bei einer bevorzugten Ausführung ist die erste Vorrichtung ein Getriebe Vorteilig ist dabei, dass die Verzahnungsteile und der Schmierstoff geschützt sind.

Weitere Vorteile ergeben sich aus den Unteransprüchen..

Die Erfindung wird nun anhand von Abbildungen näher erläutert.

Figur 1a und 1b zeigen Schnittansicht und Draufsicht eines Teils einer erfindungsgemäßen ersten Vorrichtung mit Vollwelle als Welle. Figur 1c zeigt eine zugehörige 3D-Ansicht.

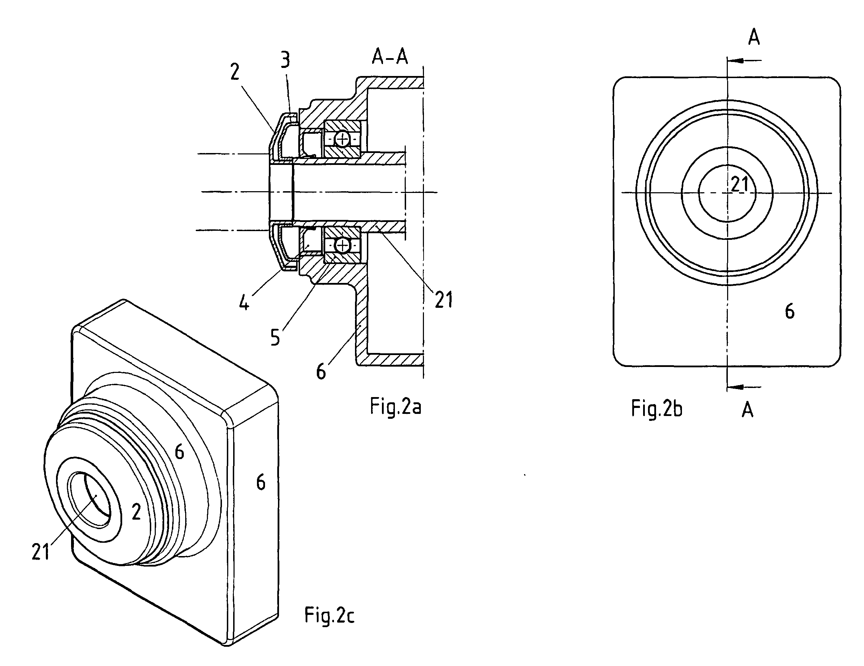

Figur 2a und 2b zeigen Schnittansicht und Draufsicht eines Teils einer erfindungsgemäßen Vorrichtung mit Hohlwelle als Welle Figur 2c zeigt eine zugehörige 3D Ansicht.

Die abtreibende Welle (1, 21) wird mit einer zweiten Vorrichtung verbunden, die je nach Anwendung verschieden ausgeführt ist. Die Welle (1, 21) ist über das Lager 5 im Gehäuse 6 der Vorrichtung gelagert. Die Vorrichtung ist eine Drehmoment zumindest durchleitende oder übertragende Vorrichtung. Dies kann also ein Getriebe, ein Adapter, eine Bremse, eine Kupplung oder ein Motor sein.

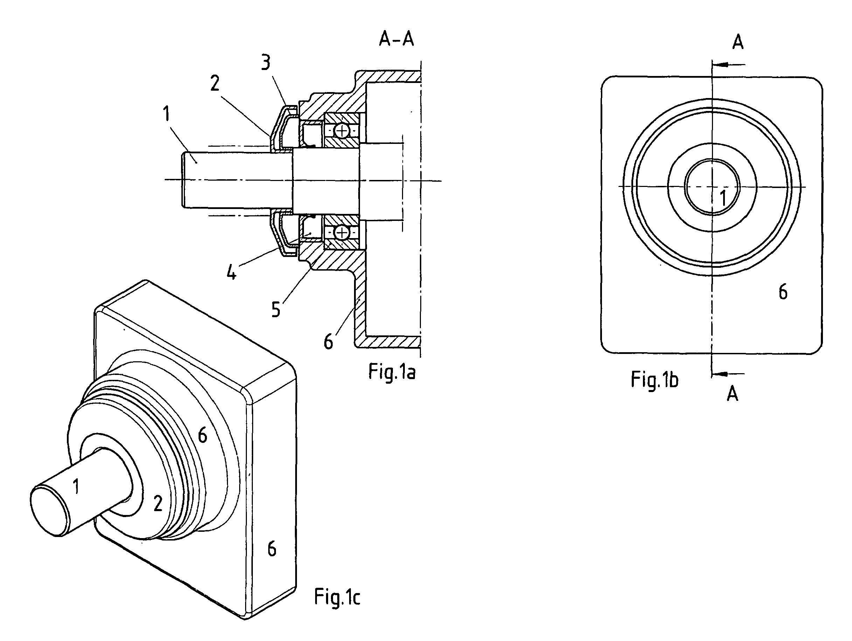

Die zweite Vorrichtung füllt zumindest den in Figur 1a gestrichelt gezeichneten Bereich aus und drückt somit in radialer Richtung auf die Schutzkappe 2.

Die Schutzkappe 2 dreht mit der Welle (1, 21) mit und ist fest mit dem von ihr umgebenen Ableitring 3 verbunden, beispielsweise verschweißt. Somit wird der Ableitring 3 an seinem auf größtem Durchmesser liegenden Ende auf das Gehäuse 6 gedrückt und schleift dort entlang.

Der Ableitring 3 verschleißt zwar, jedoch wird wegen der von der zweiten Vorrichtung ausgeübten Kraft eine Federspannung im Ableitring 3 bewirkt, die somit immer genügend viel Zustellung bewirkt, damit ein elektrisch wirksamer Schleifkontakt

Die Konstruktion, die Kräfte und Materialien sind bei der vorliegenden Erfindung derart dimensioniert und ausgewählt, dass der Verschleiß nicht derart stark ist, dass die Funktion nicht über die gesamte Standzeit der ersten Vorrichtung gewährleistet werden könnte.

Vorteiligerweise ist die Schutzkappe 2 aus Metall, um somit in kostengünstiger Weise einen stabilen und sicheren Schutz zu erzeugern. Der Ableitring 3 ist elektrisch leitend und ist vorteiligerweise aus einem Kunststoff, insbesondere aus einem mit Graphit angereicherten Kunststoff, oder einem Metall fertigbar. Es sind aber auch andere Materialien verwendbar, wenn sie zumindest elektrisch leitfähig sind und einen geringen Verschleiß bei den auftretenden physikalischen Bedingungen im Kontaktbereich am Gehäuse 6 aufweisen Insbesondere die Temperatur im Kontaktbereich ist dabei eine von der dort auftretenden Drehgeschwindigkeit der Welle abhängige Größe.Die Drehgeschwindigkeit hängt wiederum vom größten Durchmesser des Ableitrings 3 und der Drehzahl ab, wobei die Drehzahl bestimmt ist durch die Anwendung, also der Betriebsweise und - art der zweiten Vorrichtung

Der wesentliche Zweck der Erfindung ist das Abbauen von Reibungselektrizität, die beispielsweise seitens der zweiten Vorrichtung auftreten kann. Ohne den Ableitring 3 und/oder die Schutzkappe 2 würde die reibungselektrisch erzeugte Spannung an der Welle anliegen. Dies kann zu Zerstörungen und/oder Verschleiß von Komponenten, insbesondere nachgeordneten Komponenten führen"

Besonders vorteilhaft ist die erste Vorrichtung als Getriebe ausgeführt. Denn mittels des Ableitrings wird verhindert, dass sich eine reibungselektrisch verursachte Spannung aufbauen kann, die bei dem Getriebe elektrische Ströme verursachen würde, die von der Welle über ein mit dieser verbundenes Verzahnungsteil an ein oder mehrere mit diesem Verzahnungsteil im Eingriff stehende Verzahnungsteile fließen würden. Dabei würde nämlich das Schmiermittel, das zwischen diesen Verzahnungsteilen in deren Kontaktbereich sich befindet, zumindest teilweise zerstört, insbesondere durch Spalten langer Moleküle und/oder beschleunigter Oxidationsprozesse,

Mittels der erfindungsgemäßen Ableitung der Ströme können diese aber keinen derartigen Schaden anrichten. Das Gehäuse des Getriebes ist mit einem Motorgehäuse elektrisch leitend verbunden, das geerdet ist, also mit Masse verbunden ist..

### Bezugszeichenliste

- 1: Welle
- 2: Schutzkappe
- 3: Ableitring
- 4: Wellendichtring
- 5: Lager
- 6: Gehäuse
- 21: Hohlwelle

## Patentansprüche

1. Erste Vorrichtung zum zumindest Durchleiten und/oder Übertragen von Drehmoment, umfassend eine Welle (1,21), die über zumindest ein Lager (5) in einem Gehäuse (6) der ersten Vorrichtung gelagert ist,
wobei eine zweite Vorrichtung mit der Welle (1,21) lösbar verbindbar ist,
wobei das Gehäuse (6) und die Welle (1,21) über eine Komponente (3) in elektrisch leitfähiger Verbindung stehen,
wobei mindestens einer der Kontaktbereiche zur Komponente (3) ein ringlinienhafter Schleifkontakt ist,
wobei die Komponente (3) aus nicht-Isolierendem, also elektrisch leitfähigem Material ist,
**dadurch gekennzeichnet, dass** die Komponente (3) als mit der Welle mitdrehender Ableitring (3) ausgebildet ist, der im Bereich seines größten Durchmessers einen ringlinienhaften Schleifkontakt zum Gehäuse (6) aufweist
oder
die Komponente (3) einen mit der Welle (1,21) nicht-mitdrehenden Ableitring (3) umfasst, der im Bereich seines kleinsten Durchmessers einen ringlinienhaften Schleifkontakt zur Welle (1,21) aufweist,
wobei der Ableitring (3) zumindest teilweise von einer Schutzkappe (2) zum Schutz gegen mechanische Zerstörungen umgeben ist,
wobei die zweite Vorrichtung so mit der Welle (1,21) lösbar verbindbar ist, dass sie in axialer Richtung auf die Schutzkappe (2) drückt,
wobei der Ableitring (3) und die Schutzkappe (2) derart fest verbunden sind, dass der Ableitring (3) von der zweiten Vorrichtung mittels der Schutzkappe (2) auf das Gehäuse (6) in axialer Richtung gedrückt wird.

2. Erste Vorrichtung nach Anspruch 1,
**dadurch gekennzeichnet, dass**
das Gehäuse (6) mit elektrischer Masse verbunden ist, also geerdet ist.

3. Erste Vorrichtung nach mindestens einem der vorangegangenen Ansprüche,
**dadurch gekennzeichnet, dass**
die elektrische Verbindung von der Welle (1,21) über die Komponente (3) zum Gehäuse (6) einen um mindestens eine Größenordnung niedrigeren Widerstand aufweist als der Widerstand, der den sonstigen Gesamtheit aller elektrischen Verbindungen zwischen Welle (1,21) und Gehäuse (6) zuordenbar ist, insbesondere nach Entfernen der Komponente (3),

4. Erste Vorrichtung nach mindestens einem der vorangegangenen Ansprüche,
**dadurch gekennzeichnet, dass**
die zweite Vorrichtung die Schutzkappe und/oder den Ableitring berührt und auf diese eine Kraft derart ausübt, dass eine Federspannung aufgebaut wird und der Ableitring mit dem Gehäuse (6) in Kontakt gebracht wird.

5. Erste Vorrichtung nach mindestens einem der vorangegangenen Ansprüche,
**dadurch gekennzeichnet, dass**
die erste Vorrichtung eine Kupplung, ein Adapter, eine Bremse oder ein Elektromotor ist.

6. Erste Vorrichtung nach mindestens einem der vorangegangenen Ansprüche,
**dadurch gekennzeichnet, dass**
die erste Vorrichtung ein Getriebe ist.

## Claims

1. A first device for at least conducts and/or transmitting torque, comprising a shaft (1,21) which is mounted via at least one bearing (5) in a housing (6) in the first device,
a second device being able to be connected detachably to the shaft (1, 21),
the housing (6) and the shaft (1, 21) being connected in an electrically conductive manner via a component (3),
at least one of the regions of contact with the component (3) being an annularly linear sliding contact,
the component (3) being made of non-insulating, i.e. electrically conductive, material,
**characterised in that** the component (3) is in the form of a discharge ring (3) which rotates jointly with the shaft, which ring, in the region of its maximum diameter, has an annular linear sliding contact with the housing (6),
or
the component (3) comprising a discharge ring (3) which does not rotate jointly with the shaft (1, 21), which ring, in the region of its minimum diameter, has an annular linear sliding contact with the shaft (1, 21),
the discharge ring (3) being surrounded at least in part by a protective cap (2) to protect against mechanical destruction,
the second device being able to be detachably connected to the shaft (1,21) such that it presses on the protective cap (2) in the axial direction,
the discharge ring (3) and the protective cap (2) being securely connected such that the discharge ring (3) is pressed on to the housing (6) in the axial direction by the second device by means of the protective cap (2).

2. A first device according to Claim 1, **characterised in that** the housing (6) is connected to electrical earth, i.e. grounded.

3. A first device according to at least one of the preceding claims, **characterised in that** the electrical connection from the shaft (1, 21) via the component (3) to the housing (6) has a resistance which is lower by at least one order of magnitude than the resistance which can be assigned to the others of the totality of all the electrical connections between the shaft (1, 21) and housing (6), in particular after removing the component (3).

4. A first device according to at least one of the preceding claims, **characterised in that** the second device touches the protective cap and/or the discharge ring and exerts a force thereon such that a spring tension is built up and the discharge ring is brought into contact with the housing (6).

5. A first device according to at least one of the preceding claims, **characterised in that** the first device is a clutch, an adapter, a brake or an electric motor.

6. A first device according to at least one of the preceding claims, **characterised in that** the first device is a transmission.

## Revendications

1. Premier dispositif servant au moins à transférer et/ou à transmettre un couple, comprenant un arbre (1, 21) qui est monté au moyen d'au moins un palier (5) dans un boîtier (6) du premier dispositif,
sachant qu'un deuxième dispositif peut être assemblé de manière amovible à l'arbre (1, 21),
sachant que le boîtier (6) et l'arbre (1, 21) se trouvent en liaison électriquement conductrice par l'intermédiaire d'un élément (3),
sachant qu'au moins une des régions de contact vers l'élément (3) est un contact frotteur annulairement linéaire,
sachant que l'élément (3) est constitué d'un matériau non isolant, donc électriquement conducteur,
**caractérisé en ce que** l'élément (3) est réalisé sous la forme d'une bague de dissipation (3) tournant conjointement avec l'arbre, laquelle présente dans la région de son plus grand diamètre un contact frotteur linéairement annulaire vers le boîtier (6),
ou
l'élément (3) comprend une bague de dissipation (3) ne tournant pas conjointement avec l'arbre (1, 21), laquelle présente dans la région de son plus petit diamètre un contact frotteur linéairement annulaire vers l'arbre (1, 21),
sachant que la bague de dissipation (3) est entourée au moins partiellement par un capuchon de protection (2) pour la protéger des dégradations mécaniques,
sachant que le deuxième dispositif peut être assemblé de manière amovible à l'arbre (1, 21) de telle sorte qu'il exerce une pression en direction axiale sur le capuchon de protection (2),
sachant que la bague de dissipation (3) et le capuchon de protection (2) sont fixement assemblés de telle sorte que la bague de dissipation (3) est pressée par le deuxième dispositif, par l'intermédiaire du capuchon de protection (2), en direction axiale sur le boîtier (6).

2. Premier dispositif selon la revendication 1, **caractérisé en ce que** le boîtier (6) est relié à une masse électrique, donc est mis à la terre.

3. Premier dispositif selon au moins une des revendications précédentes, **caractérisé en ce que** la liaison électrique de l'arbre (1, 21) au boîtier (6) par l'intermédiaire de l'élément (3) présente une résistance inférieure d'au moins un ordre de grandeur à la résistance qui peut être autrement associée à l'ensemble de toutes les liaisons électriques entre l'arbre (1, 21) et le boîtier (6), notamment après enlèvement de l'élément (3).

4. Premier dispositif selon au moins une des revendications précédentes, **caractérisé en ce que** le deuxième dispositif est en contact physique avec le capuchon de protection et/ou la bague de dissipation et exerce sur eux une force de telle sorte qu'une contrainte de ressort est établie et que la bague de dissipation est amenée en contact avec le boîtier (6).

5. Premier dispositif selon au moins une des revendications précédentes, **caractérisé en ce que** le premier dispositif est un accouplement, un adaptateur, un frein ou un moteur électrique.

6. Premier dispositif selon au moins une des revendications précédentes, **caractérisé en ce que** le premier dispositif est un mécanisme de transmission.
